# EUROPEAN PATENT APPLICATION

(11) **EP 4 685 786 A1**
(43) Date of publication of application: **28.01.2026**
(21) Application number: 24778184.2
(22) Date of filing: 28.03.2024
(51) Int. Cl.: G09G 5/10

(54) **SCREEN BRIGHTNESS ADJUSTMENT METHOD AND APPARATUS, DEVICE, CHIP, AND STORAGE MEDIUM**

(30) Priority: 29.03.2023 CN 202310324625
(71) Applicant: GUANGDONG OPPO MOBILE TELECOMMUNICATIONS CORP., LTD., Dongguan, Guangdong 523860 (CN)
(72) Inventor: LUO, Hengyong, Dongguan, Guangdong 523860 (CN)
(74) Representative: Novagraaf Technologies
(86) International application number: PCT/CN2024/084588
(87) International publication number: WO 2024/199398

(57) **Abstract**

The present application discloses a screen brightness adjustment method and apparatus, a device, a chip, and a storage medium. The method comprises: acquiring screen brightness information of a first system, the first system being a system run by an electronic device prior to system switching, and a second system being a system run by the electronic device following system switching; and the second system performing screen brightness adjustment on the basis of the screen brightness information of the first system. The use of the present application allows for conveniently and smoothly adjusting screen brightness when an electronic device performs system switching, thereby improving user experience.

## Description

The present application claims priority to Chinese Patent Application No. 202310324625.2, titled "Screen Brightness Adjustment Method, Apparatus, Device, Chip, and Storage Medium", filed on March 29, 2023, the entire contents of which are incorporated herein by reference.

### TECHNICAL FIELD

The present disclosure relates to the field of terminal technologies, and in particular, but not limited to, a screen brightness adjustment method, an apparatus, a device, a chip, and a storage medium.

### BACKGROUND

With the continuous development of terminal technologies, electronic devices now offer increasingly diverse functions and richer user experiences, allowing people to enjoy various conveniences brought by technological advancements. However, demands for electronic devices have also become more stringent. For example, electronic devices may be required to support dual operating systems (referred to as dual systems).

In the related art, screen brightness adjustment processes for electronic devices are currently limited to single operating systems (referred to as single systems). For instance, when a single system receives a screen adjustment instruction, it adjusts the screen brightness to a level indicated by the instruction. However, for electronic devices with dual systems, how to adjust screen brightness remains an urgent problem to be solved.

### SUMMARY OF THE DISCLOSURE

In view of this, embodiments of the present disclosure provide a screen brightness adjustment method, an apparatus, a device, a chip, and a storage medium, which may facilitate smooth screen brightness adjustment when an electronic device performs a system switch, thereby improving the user experience.

In a first aspect, the present disclosure provides a screen brightness adjustment method, applied to an electronic device; where the electronic device includes a first system and a second system, and the screen brightness adjustment method includes:
obtaining screen brightness information of the first system; where the first system is a system running on the electronic device before a system switch, and the second system is a system running on the electronic device after the system switch; and
adjusting screen brightness of the second system based on the screen brightness information of the first system.

In a second aspect, the present disclosure provides a screen brightness adjustment apparatus, applied to an electronic device; where the electronic device includes a first system and a second system, and the screen brightness adjustment apparatus includes:
an obtaining module, configured to obtain screen brightness information of the first system; where the first system is a system running on the electronic device before a system switch, and the second system is a system running on the electronic device after the system switch; and
an adjustment module, configured to adjust screen brightness of the second system based on the screen brightness information of the first system.

In a third aspect, the present disclosure provides a chip system, including a first system and a second system, the second system including a processor and an interface; where the processor is coupled to the interface, the interface is configured to receive or output signals, and the processor is configured to execute a computer program to implement the method provided by the embodiments of the present disclosure.

In a fourth aspect, the present disclosure provides an electronic device, including a first system and a second system; where the second system includes a memory and a processor, and the memory stores a computer program executable by the processor; the processor, when executing the program, implements the method described in the embodiments of the present disclosure.

In a fifth aspect, the present disclosure provides a computer-readable storage medium, storing a computer program; where the computer program, when executed by a processor, causes the processor to implement the method provided by the embodiments of the present disclosure.

### BRIEF DESCRIPTION OF THE DRAWINGS

The accompanying drawings, which are incorporated herein and constitute part of this specification, illustrate embodiments conforming to the present disclosure and, together with the description, serve to explain the technical solutions of the present disclosure.
FIG. 1 is a schematic structural diagram of an electronic device according to some embodiments of the present disclosure.
FIG. 2 is a flowchart of a screen brightness adjustment method according to some embodiments of the present disclosure.
FIG. 3(a) is a schematic diagram of screen brightness increase according to some embodiments of the present disclosure.
FIG. 3(b) is a schematic diagram of screen brightness decrease according to some embodiments of the present disclosure.
FIG. 4 is a flowchart of a screen brightness adjustment method according to other embodiments of the present disclosure.
FIG. 5 is a schematic flowchart of a mode adjustment method according to some embodiments of the present disclosure.
FIG. 6 is a schematic flowchart of a mode adjustment method according to other embodiments of the present disclosure.
FIG. 7 is a schematic structural diagram of a screen brightness adjustment apparatus according to some embodiments of the present disclosure.
FIG. 8 is a schematic structural diagram of an electronic device according to other embodiments of the present disclosure.
FIG. 9 is a schematic structural diagram of a chip system according to some embodiments of the present disclosure.

### DETAILED DESCRIPTION

To make the objectives, technical solutions, and advantages of the embodiments of the present disclosure clearer, the specific technical solutions of the present disclosure will be further described in detail below with reference to the accompanying drawings in the embodiments of the present disclosure. The following embodiments are intended to illustrate the present disclosure but are not intended to limit its scope.

Unless otherwise defined, all technical and scientific terms used herein have the same meanings as those commonly understood by those skilled in the art. The terms used herein are only for the purpose of describing embodiments of the present disclosure and are not intended to limit the present disclosure.

In the following description, references to "some embodiments" describe a subset of all possible embodiments. However, it can be understood that "some embodiments" may be the same subset or different subsets of all possible embodiments and may be combined with each other without conflict.

It should be noted that the terms "first/second/third" involved in the embodiments of the present disclosure are intended to distinguish similar or different objects and do not represent a specific ordering of the objects. It can be understood that "first/second/third" may, where permitted, interchange specific sequences or orders such that the embodiments of the present disclosure described herein can be implemented in sequences other than those illustrated or described herein.

First, some technical terms or concepts involved in the present disclosure are introduced.

Dual System: A hardware architecture based on two processor chips, where each processor runs an independent operating system, for example, a first processor runs a first system, and a second processor runs a second system. The two systems interact with each other to complete the functions of the hardware device.

Always On Display (AOD): Also known as always-on screen display, it is a function where the screen can continue to display an image after the system (e.g., CPU) enters a sleep mode. When the electronic device is in the AOD mode, the screen brightness and refresh rate are reduced, and the entire system is in a dormant, non-working state. The system is only awakened to draw new interface data for screen display when the data on the interface needs updating. The AOD mode is a low-power continuous screen-on mode.

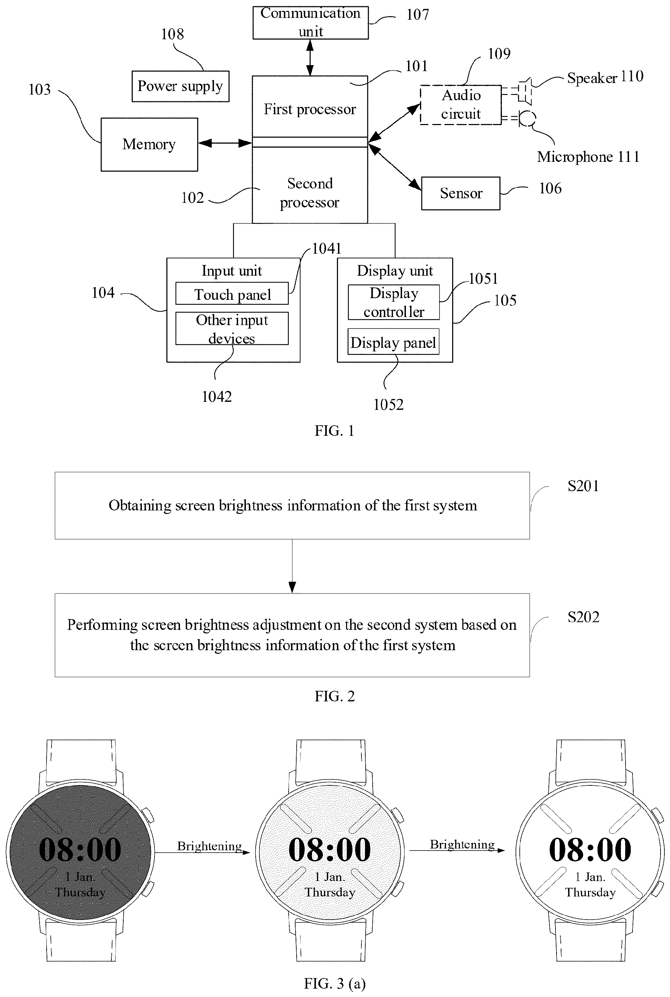

Next, embodiments of an electronic device to which the present disclosure is applicable are introduced. Referring to FIG. 1, FIG. 1 is a schematic structural diagram of an electronic device according to some embodiments of the present disclosure. The electronic device shown in FIG. 1 may include a first processor 101, a second processor 102, a memory 103, an input unit 104, a display unit 105, a sensor 106, a communication unit 107, a power supply 108, an audio circuit 109, a speaker 110, a microphone 111, or other functional components. Those skilled in the art will understand that the electronic device shown in FIG. 1 is not limiting and may be determined according to actual needs, may include more or fewer components than shown, or combine certain components, or have different component arrangements.

In practical applications, each processor in the electronic device can run an independent operating system. For example, the first processor 101 can run a first system, and the second processor 102 can run a second system. The present disclosure does not limit the number of each component in the device. For example, there may be multiple memories 103 and display units 105, such as one operating system corresponding to one memory 103 and one display unit (which may be a display screen) 105. When the electronic device 100 includes one display unit 105, the first system run by the first processor 101 and the second system run by the second processor 102 will share the same display unit. When the electronic device 100 includes two display units 105, the first system run by the first processor 101 and the second system run by the second processor 102 may independently use one display unit 105 respectively. For convenience of description, the following description in the present disclosure uses an example where the first system and the second system share the same display unit 105, but the present disclosure is not limited thereto.

The memory 103 may be configured to store computer programs (also called program code or instructions). The corresponding processor executes the electronic device's various functional applications and data processing by running the computer programs stored in the memory 103. The memory 103 may mainly include a program storage area and a data storage area. The program storage area can store an operating system, applications corresponding to at least one function (such as touch screen reporting point function, image playback function, etc.). The data storage area can store data of the electronic device, such as usage data generated when the user uses the electronic device. Furthermore, the memory 103 may include high-speed random-access memory and may include non-volatile memory, such as at least one magnetic disk storage device, flash memory device, or other volatile solid-state storage devices.

The input unit 104 may be configured to receive input numeric or character information and generate signal inputs related to user settings and functional control of the electronic device. Specifically, the input unit 104 may include a touch panel 1041 and other input devices 1042. The touch panel 1041 can collect touch operations performed by the user on or near it (e.g., operations performed by the user using a finger, stylus, or any suitable object or accessory on or near the touch panel 1041) and drive the corresponding connection device according to a preset program. In some embodiments, the touch panel 1041 may include two parts: a touch detection device and a touch controller. The touch detection device is configured to detect the user's touch orientation and a signal brought by the touch operation, and transmit the signal to the touch controller. The touch controller is configured to receive touch information from the touch detection device, convert it into contact coordinates, send them to the corresponding processor, and can receive and execute commands from the corresponding processor. Furthermore, the touch panel 1041 may be implemented using various types such as resistive, capacitive, infrared, and surface acoustic wave. Besides the touch panel 1041, the input unit 104 may further include another input device 1042. Specifically, the other input device 1042 may include, but is not limited to, one or more of a physical keyboard, function keys (such as volume control buttons, switch buttons, etc.), a trackball, a mouse, and a joystick.

The display unit 105 may be configured to display information input by the user, information provided to the user, and various menus of the electronic device. The display unit 105 may include a display controller 1051 and a display panel 1052. The display controller 1051 is configured to control the display of the display panel 1052, for example, controlling the power-on sequence of the display panel 1052, controlling the screen brightness and display duration of the display panel 1052, etc., which may be configured according to actual needs, and the present disclosure does not limit it. It should be noted that the present disclosure does not limit the number of display controllers 1051. For example, in practical applications, each processor may be configured with a display controller, such as the first processor 101 configured with a first display controller and the second processor 102 configured with a second display controller, both configured to control the display of the same display panel 1052. In some embodiments, the display panel 1052 may be implemented using a Liquid Crystal Display (LCD), Organic Light-Emitting Diode (OLED), etc. Furthermore, the touch panel 1041 may cover the display panel 1052. When the touch panel 1041 detects a touch operation on or near it, the touch panel 1041 transmits the information to the corresponding processor to determine the type of touch operation (also called the type of touch event). Subsequently, the corresponding processor provides corresponding visual output on the display panel 1052 according to the type of touch event. Although in FIG. 1, the touch panel 1041 and the display panel 1052 are implemented as two independent components to achieve the input and output functions of the system, in some embodiments, the touch panel 1041 and the display panel 1052 may be integrated to achieve the input and output functions of the system.

The electronic device may further include at least one type of sensor 106, such as a touch sensor, light sensor, motion sensor, or other sensors. Specifically, the touch sensor may be configured to detect whether there is currently a user touching the touch panel 1041, etc. The light sensor may include an ambient light sensor and a proximity sensor. The ambient light sensor can adjust the brightness of the display panel 1052 according to the brightness of the ambient light. The proximity sensor can turn off the display panel 1052 and/or the backlight when the device where the system is located is moved close to the ear. As a type of motion sensor, an accelerometer sensor can detect the magnitude of acceleration in various directions (generally three axes) and can detect the magnitude and direction of gravity when stationary. It can be applied in applications for recognizing the posture of the device where the system is located (such as horizontal/vertical screen switching, related games, magnetometer posture calibration), vibration recognition related functions (such as a pedometer, tap detection), etc. Other sensors that can be configured in the system, such as a gyroscope, barometer, hygrometer, thermometer, infrared sensor, etc., are not described herein.

The communication unit 107 is configured for sending and receiving information or signals, such as receiving information like touch events reported by the touch panel 1041. In practical applications, the communication unit 107 may include a Radio Frequency (RF) circuit, a Wireless Fidelity (Wi-Fi) unit, or other communication units. The RF circuit may be configured for sending and receiving signals during information transmission or calls, specifically, receiving downlink information from a base station and providing it to the corresponding processor for processing; additionally, sending uplink data to the base station. Typically, the RF circuit includes, but is not limited to, an antenna, at least one amplifier, a transceiver, a coupler, a Low Noise Amplifier (LNA), a duplexer, etc. Furthermore, the RF circuit may communicate with networks and other devices through wireless communication. The aforementioned wireless communication may use any communication standard or protocol, including but not limited to Global System for Mobile communications (GSM), General Packet Radio Service (GPRS), Code Division Multiple Access (CDMA), Wideband Code Division Multiple Access (WCDMA), Long Term Evolution (LTE), email, Short Messaging Service (SMS), etc.

Wi-Fi is a short-range wireless transmission technology. The system can help users send and receive emails, browse web pages, and access streaming media through the Wi-Fi module, providing users with wireless broadband Internet access. It can be understood that the Wi-Fi unit is not an essential component of the electronic device and may be omitted as needed without changing the essence of the present disclosure.

The audio circuit 109, the speaker 110, and the microphone 111 can provide an audio interface between the user and the electronic device 100.

The audio circuit 109 can convert received audio data into an electrical signal and transmit it to the speaker 110, which converts it into a sound signal for output. On the other hand, the microphone 111 converts collected sound signals into electrical signals, which are received by the audio circuit 109 and converted into audio data. The audio data is then output to the corresponding processor for processing and then sent to other devices via the communication unit 107, or the audio data is output to the memory 103 for further processing.

The processor is a control center of the corresponding system. For example, the first processor 101 is the control center of the first system, and the second processor 102 is the control center of the second system. The processor can connect various parts of the entire system using various interfaces and lines, execute the system's various functions and process data by running or executing computer programs stored in the memory 103 and calling data stored in the memory 103, thereby monitoring the system as a whole. In some embodiments, the processor may include one or more processing units. In some embodiments, the processor may integrate an application processor and a modem processor, where the application processor mainly handles the operating system, user interface, and applications, etc., and the modem processor mainly handles wireless communication. It can be understood that the aforementioned modem processor may not be integrated into the processor.

The electronic device may further include a power supply 108 (such as a battery) that supplies power to various components. In some embodiments, the power supply 108 may be logically connected to the corresponding processor through a power management system, thereby achieving functions such as charging management, discharging management, and power consumption management through the power management system. Although not shown, the electronic device may further include functional modules such as a camera and a Bluetooth module, which is not described herein.

The electronic device of the present disclosure includes, but is not limited to, wearable devices such as smartwatches and smart bands, and may include devices such as smartphones (e.g., Android phones, iOS phones, etc.), personal computers, tablet computers, handheld computers, e-readers, Mobile Internet Devices (MIDs), or other devices with communication functions.

Based on the above embodiments, the method embodiments involved in the present disclosure are introduced below. Referring to FIG. 2, FIG. 2 is a flowchart of a screen brightness adjustment method according to some embodiments of the present disclosure. The method shown in FIG. 2 is applied to the aforementioned electronic device including a first system and a second system, and may be specifically applied to the second system of the electronic device. The method includes operations at blocks illustrated in FIG. 2.

At block S201: obtaining, by the second system, screen brightness information of the first system; where the first system is a system running on the electronic device before a system switch, and the second system is a system running on the electronic device after the system switch.

In the embodiments of the present disclosure, when the second system detects that the electronic device needs to perform a system switch, the second system may obtain the screen brightness information of the first system. The first system is the system running on the electronic device before the system switch, and the second system is the system required to run on the electronic device after the system switch.

The present disclosure does not limit the implementation of detecting that the electronic device needs to perform a system switch. For example, after receiving a system switch request or system switch message sent by the first system, the second system may detect that the electronic device needs to perform a system switch. The system switch request or system switch message is configured to indicate that the electronic device needs to perform a system switch-in this case, switching from the first system to the second system. The system switch request or system switch message may be forwarded by upper-layer software to the first system, generated by the first system after detecting a user's system switch operation, or obtained by the first system from another device (such as a terminal device or server). The present disclosure does not limit its specific implementation.

The present disclosure also does not limit the implementation of obtaining the screen brightness information of the first system. For example, the second system may obtain the screen brightness information from the first system through network interaction. Alternatively, when the system switch request or system switch message sent by the first system carries the screen brightness information of the first system, the second system may directly parse the system switch request or system switch message to obtain the screen brightness information. The present disclosure does not limit its specific implementation.

For example, the electronic device is currently running on the first system. After receiving a system switch request, the first system may obtain the screen brightness information of the first system. The first system then sends a system switch message to the second system of the electronic device to indicate that the electronic device needs to perform a system switch. This system switch message may carry the screen brightness information of the first system. Accordingly, after receiving the system switch message, the second system may determine that the electronic device needs to switch from the first system to itself, and further parse the system switch message to obtain the screen brightness information of the first system.

The screen brightness information in the present disclosure refers to the brightness information of the display screen when the electronic device is running on the first system. It may include, but is not limited to, a screen brightness value, screen state (such as a screen-on state or screen-off state), etc.

At block S202: performing, by the second system, screen brightness adjustment on the second system based on the screen brightness information of the first system.

In the present disclosure, the screen brightness of the second system may be adjusted according to the screen brightness information of the first system, avoiding problems such as screen flicker due to non-continuous dimming, thereby improving the user experience.

In practical applications, after obtaining the screen brightness information of the first system, the second system may send a screen-on event to a display controller of the second system to prompt the display controller to perform screen-on display. Furthermore, the second system may initialize the display screen (e.g., a Liquid Crystal Display, LCD), such as resetting the LCD, setting the display orientation and display window of the LCD, etc., which is not limited in the present disclosure. Then, the screen brightness of the second system is adjusted based on the screen state of the first system.

In a specific embodiment, the screen state of the first system may be determined based on the screen brightness information of the first system. The screen state includes a screen-on state and a screen-off state. The present disclosure does not limit the implementation of determining the screen state. For example, the screen state of the first system may be determined according to the brightness value indicated by the screen brightness information of the first system. For instance, when the indicated brightness value is greater than a preset screen-on threshold, the screen state of the first system is determined to be the screen-on state; when the indicated brightness value is less than a preset screen-off threshold, the screen state of the first system is determined to be the screen-off state, etc. Herein, the aforementioned preset screen-on threshold and preset screen-off threshold are both configured for determining the screen state. They may be brightness thresholds set by the system/user, and they may be the same or different, which is not limited in the present disclosure. Typically, the preset screen-off threshold may be less than or equal to the preset screen-on threshold.

Furthermore, a target brightness value required by the second system may be determined. The present disclosure does not limit the implementation of determining the target brightness value. For example, the target brightness value may be a startup brightness value preset by the system or user; alternatively, the target brightness value may be calculated based on an ambient brightness value where the second system is located, e.g., a less ambient brightness value corresponds to a larger target brightness value, and vice versa. The present disclosure does not limit its calculation method. For example, by directly substituting the ambient brightness value into a predefined brightness calculation formula, the target brightness value may be obtained.

Finally, the screen brightness of the second system may be adjusted to the target brightness value based on the screen state of the first system. In one implementation, when the screen state is the screen-on state, the screen brightness of the second system may be adjusted to the target brightness value according to a preset first brightness adjustment rule.

In another implementation, when the screen state is the screen-off state, the screen brightness of the second system may be adjusted to the target brightness value according to a preset second brightness adjustment rule.

The first brightness adjustment rule and the second brightness adjustment rule involved in the present disclosure are both brightness adjustment rules set by the system. A brightness adjustment rate indicated by the first brightness adjustment rule is less than a brightness adjustment rate indicated by the second brightness adjustment rule. For example, the first brightness adjustment rule may be a gradual brightness adjustment rule, meaning that the second system can adjust the screen brightness of the second system smoothly and gradually to the target brightness value multiple times in succession, thereby achieving a smooth and gradual screen brightness adjustment effect and avoiding issues such as screen flickering caused by non-continuous dimming. The second brightness adjustment rule may be an abrupt brightness adjustment rule, meaning that the second system can directly adjust the screen brightness of the second system to the target brightness value in one step, thereby saving brightness adjustment time.

The present disclosure does not limit the implementation of adjusting the screen brightness of the second system to the target brightness value. For example, in practical applications, the processor of the second system may send a brightness command to the display controller of the second system. The brightness command is configured to instruct the display controller to adjust the screen brightness of the second system to the target brightness value. Accordingly, the display controller of the second system can receive and respond to the brightness command, adjusting the screen brightness of the second system to the target brightness value.

It should be noted that the present disclosure does not limit the numerical value of the target brightness value, which may be determined according to actual needs. When the target brightness value is greater than the current screen brightness of the second system, it indicates that the second system needs to gradually increase the screen brightness, allowing the screen brightness of the second system to be adjusted smoothly and gradually to the target brightness value. For example, referring to FIG. 3(a), FIG. 3(a) is a schematic diagram of screen brightness increase according to some embodiments of the present disclosure. In the example of FIG. 3(a), the second system can smoothly and slowly increase the screen brightness of the second system to the target brightness value through two screen brightness adjustments.

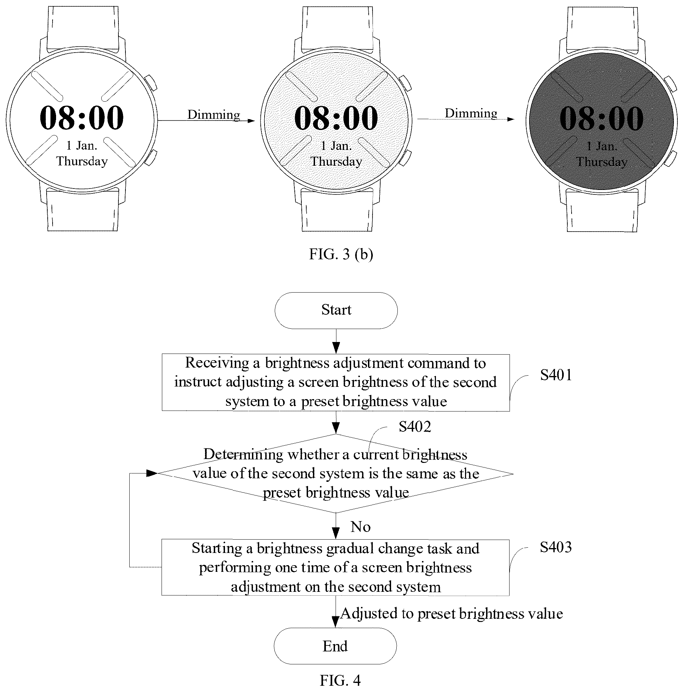

Conversely, when the target brightness value is less than the current screen brightness of the second system, it indicates that the second system needs to gradually decrease the screen brightness, allowing the screen brightness of the second system to be adjusted smoothly and gradually to the target brightness value. For example, referring to FIG. 3(b), FIG. 3(b) is a schematic diagram of screen brightness decrease according to some embodiments of the present disclosure. In the example of FIG. 3(b), the second system can smoothly and slowly decrease the screen brightness of the second system to the target brightness value through two screen brightness adjustments, which is not limited in the present disclosure.

Before adjusting the screen brightness of the second system to the target brightness value, the second system may further control the turning on/off of the brightness gradual change function of the second system based on the screen state. Herein, the first brightness adjustment rule is a brightness adjustment rule adopted after enabling the brightness gradual change function, and the second brightness adjustment rule is a brightness adjustment rule adopted after disabling the brightness gradual change function. For the first and second brightness adjustment rules, reference may be made to the relevant descriptions above in the present disclosure, which will not be repeated herein.

The present disclosure does not limit the implementation of the aforementioned on/off control. For example, in one implementation, the present disclosure may utilize hardware dimming characteristics to control the turning on/off of the brightness gradual change function. In some embodiments of the present disclosure, the second system may send an on/off control command to the display controller of the second system based on the screen state, to instruct the turning on/off of the brightness gradual change function of the second system. In an exemplary embodiment, when the screen state is the screen-on state, the processor of the second system may send an enable command to the display controller of the second system. The enable command is configured to instruct the enabling of the brightness gradual change function of the second system.

Accordingly, the display controller of the second system may receive and respond to the enable command, enabling the brightness gradual change function of the second system. In practical applications, after receiving the enable command, the display controller of the second system may set a specific register (e.g., register No. 61) of the display controller to 1, indicating that the brightness gradual change function of the second system is enabled. Accordingly, after receiving a brightness command, the display controller of the second system may adjust the screen brightness of the second system to the target brightness value in response to the brightness command.

In another exemplary embodiment, when the screen state is the screen-off state, the processor of the second system may send a disable command to the display controller of the second system. The disable command is configured to instruct the disabling of the brightness gradual change function of the second system. Accordingly, the display controller of the second system may receive and respond to the disable command, disabling the brightness gradual change function of the second system. In practical applications, after receiving the disable command, the display controller of the second system may set a specific register (e.g., register No. 61) of the display controller to 0, indicating that the brightness gradual change function of the second system is disabled. Accordingly, after receiving a brightness command, the display controller of the second system may adjust the screen brightness of the second system to the target brightness value in response to the brightness command.

In another implementation, the present disclosure may use a software method to control the turning on/off of the brightness gradual change function. In some embodiments of the present disclosure, the second system may reset the brightness gradual change indication information of the second system based on the screen state, to instruct the turning on/off of the brightness gradual change function of the second system. In an exemplary embodiment, when the screen state is the screen-on state, the second system, via its processor, may reset the brightness gradual change indication information of the second system, such that the reset brightness gradual change indication information indicates that the brightness gradual change function of the second system is enabled.

In another exemplary embodiment, when the screen state is the screen-off state, the second system may still reset the brightness gradual change indication information of the second system, such that the reset brightness gradual change indication information indicates that the brightness gradual change function of the second system is disabled.

The present disclosure does not limit the form of the aforementioned brightness gradual change indication information. For example, it may exist as a flag bit, indication bit, or status information of the system's brightness gradual change function. Taking the brightness gradual change indication information as a brightness gradual change function flag bit as an example, when the second system detects that the screen state of the first system is the screen-off state, it may determine that the system switch of the second system occurred while the first system was in the screen-on state. Then, the second system may set the brightness gradual change function flag bit to a first flag value (e.g., False), to characterize/indicate that the brightness gradual change function of the second system is disabled. Conversely, when the second system detects that the screen state of the first system is the screen-on state, it may determine that the system switch of the second system occurred while the second system was in the screen-off state. Then, the second system may set the brightness gradual change function flag bit to a second flag value (e.g., True), to characterize/indicate that the brightness gradual change function of the second system is enabled.

It is understandable that after the second system enables its own brightness gradual change function, it may maintain the characteristic of screen brightness gradual change until the brightness gradual change function of the second system is disabled. After enabling the brightness gradual change function, the second system may adjust its own screen brightness smoothly and gradually to the target brightness value multiple times in succession according to the preset second brightness adjustment rule mentioned above. For details, reference may be made to the foregoing description in the embodiments of the present disclosure, which will not be repeated herein.

It should be noted that during the aforementioned initialization phase, the present disclosure may further initialize the brightness gradual change function of the second system. For example, in a scenario where it is desired to use the hardware dimming characteristics of the display controller to control whether to enable the brightness gradual change function, the second system may send an enable command to the display controller of the second system via the processor, to instruct the enabling of the brightness gradual change function of the second system, thereby achieving the initialization of the system brightness gradual change function. Alternatively, in a scenario where it is desired to use a software method to control whether to enable the brightness gradual change function, the second system may send a disable command to the display controller of the second system via the processor, to instruct the disabling of the brightness gradual change function of the second system, thereby achieving the initialization of the system brightness gradual change function.

Some embodiments involved in the present disclosure are described below.

In some embodiments, when the second system receives a brightness command for the second system, the second system may redraw and display the interface data of a target interface. Herein, the target interface may be a main interface displayed in the first system before the electronic device performs a system switch. The main interface is set by the system or user. For example, the main interface may be the topmost or surface-level interface among all interfaces displayed in the first system before the system switch, or may be the last started interface among all interfaces displayed in the first system. The present disclosure does not limit the implementation of determining the target interface. For example, interfaces may be numbered sequentially according to their start time, and an interface with the greatest sequence number among all interfaces enabled for display in the first system may be determined as the target interface.

In some embodiments of the present disclosure, the second system may receive a screen-on command for the second system itself and, in response to the screen-on command, first determine the target interface, then notify an application to which the target interface belongs to redraw the interface data of the target interface, and subsequently display the redrawn interface data of the target interface on the display screen corresponding to the second system for the user to view.

The present disclosure does not limit the implementation of receiving the screen-on command. For example, after receiving a system switch command or system switch notification sent by the first system, the second system may determine that there is a need to use the screen-on function of the second system, and thus generate and obtain the screen-on command. Alternatively, the second system may generate and obtain the screen-on command when detecting a user's screen-on operation. The screen-on operation includes, but is not limited to, a user's touch operation on a specific control in the electronic device, a user's click operation on the display screen corresponding to the second system of the electronic device, or the user raising his/her wrist to light up the display screen of the second system, etc. The present disclosure does not limit this.

The present disclosure further does not limit the implementation of redrawing the interface data of the target interface. For example, the second system may first check whether the interface data of the target interface exists in the memory of the electronic device. When the interface data of the target interface exists, the second system may directly obtain the interface data of the target interface from the memory, and then redraw and display it on the display screen corresponding to the second system based on this interface data. Conversely, when the interface data of the target interface cannot be obtained from the memory, the second system (which may be the application to which the target interface belongs in the system) may obtain basic data of the target interface, and then redraw the interface data of the target interface based on this basic data and display the redrawn interface data. The present disclosure does not limit the implementation of obtaining the basic data. For example, the basic data of the target interface may be obtained according to an interface identifier of the target interface. The basic data herein refers to fundamental data describing the target interface, which may include, but is not limited to, interface elements of the interface design. After obtaining the basic data of the target interface, the target interface may be redrawn based on the basic data to obtain the interface data of the target interface. Further, the interface data of the target interface may be displayed on the display screen of the second system for the user to view.

The interface data in the present disclosure, also known as User Interface (UI) data, is data configured to describe the details of the target interface. It may include, but is not limited to, interface size, interface color, positions of controls within the interface, or other information. The present disclosure does not limit this.

In some embodiments, the present disclosure supports smooth brightness adjustment of a single system in the screen-on state. Taking the single system as the second system as an example, the second system may receive a brightness adjustment command. The brightness adjustment command is configured to instruct the adjustment of the screen brightness of the second system to a preset brightness value. Furthermore, in response to the brightness adjustment command, it may be determined whether the preset brightness value is the same as the current target brightness value of the second system. When the preset brightness value and the current target brightness value of the second system are the same, the process may be ended. When the preset brightness value and the current target brightness value of the second system are different, at least one time of screen brightness adjustment may be performed on the second system according to the preset first brightness adjustment rule, utilizing the screen brightness gradual change function to adjust the screen brightness multiple times in succession, thereby adjusting the screen brightness of the second system from the current target brightness value to the preset brightness value.

The present disclosure does not limit the implementation of receiving the brightness adjustment command. For example, the second system may generate and obtain the brightness adjustment command when it detects a user's brightness adjustment operation on the display screen of the electronic device. The brightness adjustment operation includes, but is not limited to, a user's touch operation on a specific control in the electronic device, such as a user's click operation on a brightness button on the display screen. Alternatively, the second system may receive a brightness adjustment command sent from another device (e.g., a server or terminal device) via a network.

For example, referring to FIG. 4, FIG. 4 is a flowchart of a screen brightness adjustment method according to other embodiments of the present disclosure. The method includes operations at blocks illustrated in FIG. 4.

At block S401: receiving, by the second system, a brightness adjustment command; where the brightness adjustment command is configured to instruct adjusting a screen brightness of the second system to a preset brightness value.

At block S402: determining whether a current brightness value of the second system is the same as the preset brightness value.

When the current brightness value of the second system is the same as the preset brightness value, the process may end. Otherwise, i.e., when the current brightness value of the second system is different from the preset brightness value, S403 is performed.

At block S403: starting a brightness gradual change task and performing one time of a screen brightness adjustment on the second system.

When it is determined that the current brightness value of the second system is different from the final preset brightness value, the second system may initiate a brightness adjustment process, i.e., starting the brightness gradual change task and performing one screen brightness adjustment on the second system according to a preset first brightness adjustment rule. The first brightness adjustment rule is a brightness gradual change adjustment rule set by the system or user. For example, it may increase by 4 brightness values each time, or calculate the change amount for each brightness adjustment according to a custom brightness change curve formula. The present disclosure does not limit this.

At arrow S404: repeating S402-S403 until the screen brightness of the second system is adjusted to the preset brightness value.

After each screen brightness adjustment by the second system, S402-S403 may be repeated. The change value for each brightness adjustment is calculated according to the preset first brightness adjustment rule, and the brightness is adjusted according to the calculated change value, thereby smoothly and gradually adjusting the screen brightness of the second system to the final preset brightness value, for ending the entire brightness adjustment process.

In some embodiments, the present disclosure supports the entry into and exit from a high-brightness mode of a single system in the screen-on state. The brightness modes in which the single system operates include a normal mode and a high-brightness mode. The brightness mode indicates the operating mode of the single system in the screen-on state. It may include the normal mode, the high-brightness mode, or other custom modes subdivided based on screen brightness values. The present disclosure does not limit this.

Taking the single system as the second system as an example, the second system may receive a mode adjustment command. The mode adjustment command is configured to instruct adjusting a current brightness mode of the second system to a target mode. The brightness mode and the target mode are different, and the brightness mode includes the high-brightness mode and the normal mode. Herein, the screen brightness indicated by the high-brightness mode is greater than the screen brightness indicated by the normal mode. That is, the minimum brightness value (or lower limit) indicated by the high-brightness mode is greater than the maximum brightness value (or upper limit) indicated by the normal mode.

Accordingly, the second system may respond to the mode adjustment command and adjust the current brightness mode of the second system to the target mode. The present disclosure does not limit the implementation of adjusting to the target mode. Two specific implementations are exemplarily given below.

In a first implementation, when the brightness mode is the normal mode and the target mode is the high-brightness mode, the present disclosure may first adjust the screen brightness of the second system to the maximum brightness value supported in the normal mode, and then enable and enter the high-brightness mode, thereby adjusting the current normal mode of the second system to the high-brightness mode.

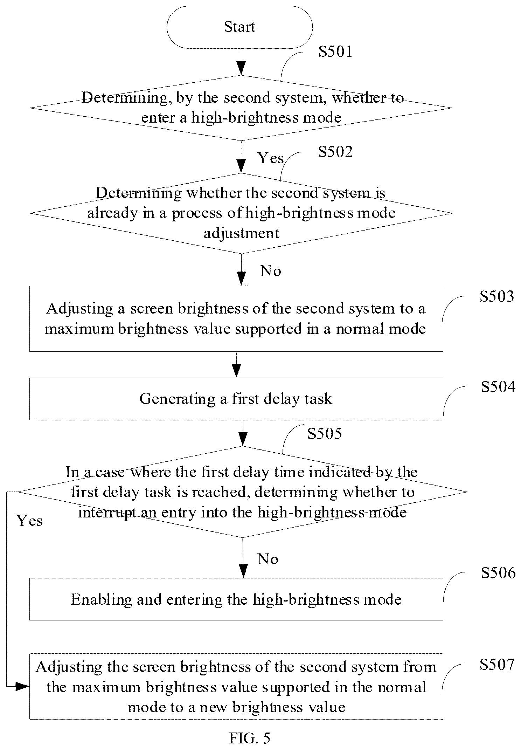

In practical applications, after receiving the mode adjustment command, the second system may identify whether the second system is already in the process of entering the high-brightness mode. When the second system is in the process of entering the high-brightness mode, the following described process may end. When the second system is not in the process of entering the high-brightness mode, the present disclosure may first adjust the screen brightness of the second system to the maximum brightness value supported in the normal mode. The maximum brightness value is set by the system or user, for example, it may be 253, 254, or 255, etc. The present disclosure does not limit this. The processor of the second system may send a first delay command (also referred to as a first delay task) to the display controller of the second system, to indicate a first delay time required by the display controller. When the first delay time is reached, the high-brightness mode of the system may be enabled. The display controller may automatically increase the screen brightness to enter the high-brightness mode. For example, the screen brightness of the second system may be adjusted to the maximum brightness value supported in the high-brightness mode (e.g., 256), etc. The present disclosure does not limit this. Reference may be made to FIG. 5 for a detailed introduction to the above mode adjustment process.

Referring to FIG. 5, FIG. 5 is a schematic flowchart of a mode adjustment method according to some embodiments of the present disclosure. The method includes operations at blocks illustrated in FIG. 5.

At block S501: determining, by the second system, whether to enter a high-brightness mode.

In the embodiments of the present disclosure, the screen brightness modes of the second system include a high-brightness mode and a normal mode. When the second system is currently in the normal mode, the second system may detect or determine in real time or periodically whether it needs to enter the high-brightness mode. When the second system determines that it needs to enter the high-brightness mode, S502 is performed. Otherwise, i.e., when the second system determines that it does not need to enter the high-brightness mode, the process ends.

The present disclosure does not limit the implementation of determining whether to enter the high-brightness mode. For example, when the second system receives a mode adjustment command, the second system may determine that it currently needs to enter the high-brightness mode, etc. For the introduction of the mode adjustment command, reference may be made to the relevant introduction in the foregoing embodiments, which will not be repeated herein.

At block S502: determining whether the second system is already in a process of high-brightness mode adjustment.

The present disclosure does not limit the implementation of S502. For example, the second system may determine whether its own screen brightness is already in a process of increasing gradually. When the screen brightness is already in the process of increasing gradually, it may be determined that the second system is already in the process of high-brightness mode adjustment, and the following described process may end; when the screen brightness is not in the process of increasing gradually, it may be determined that the second system is not in the process of high-brightness mode adjustment, and S503 may be performed.

At block S503: adjusting a screen brightness of the second system to a maximum brightness value supported in a normal mode.

When it is determined that the second system is not in the process of high-brightness mode adjustment, the current screen brightness of the second system may be adjusted smoothly and gradually to the maximum brightness value supported in the normal mode (e.g., 255) according to a preset first brightness adjustment rule. For the first brightness adjustment rule, reference may be made to the relevant introduction in the foregoing embodiments, which will not be repeated herein.

At block S504: generating a first delay task.

The second system may submit a first delay task to a display controller of the second system via the processor. The first delay task is configured to reflect a first delay time required for the screen brightness adjustment in S503. The first delay time may be set by the system or user, for example, 2 seconds (s), etc.

At block S505: in a case where the first delay time indicated by the first delay task is reached, determining whether to interrupt an entry into the high-brightness mode.

When the second system detects that the current time has reached the first delay time, it may be determined whether the process of entering the high-brightness mode needs to be interrupted currently. When it is determined that the process of entering the high-brightness mode needs to be interrupted currently, S507 is performed. Otherwise, i.e., when it is determined that the process of entering the high-brightness mode does not need to be interrupted currently, S506 is performed.

The present disclosure does not limit the implementation of determining whether to interrupt the entry into the high-brightness mode. For example, in a scenario, the second system may detect whether it currently needs to decrease the screen brightness of the second system. When it needs to decrease the screen brightness, it may be determined that the entry into the high-brightness mode needs to be interrupted; otherwise, it may be determined that no interruption is needed. The present disclosure does not limit the implementation of detecting whether screen brightness decrease is needed. For example, when the second system receives a brightness decrease command, it may be determined that the second system currently needs to decrease the screen brightness, etc. This will not be detailed or limited here.

In another scenario, the second system may detect whether a mode interruption command has been received. When the mode interruption command has been received, it may be determined that the entry into the high-brightness mode needs to be interrupted; otherwise, it may be determined that no interruption is needed. The present disclosure does not limit the implementation of receiving the mode interruption command. For example, after detecting a user's mode interruption operation, the second system may generate and obtain the mode interruption command, etc.

At block S506: enabling and entering the high-brightness mode.

When it is determined that there is no need to interrupt the entry into the high-brightness mode, the second system may enable the high-brightness mode. The display controller of the second system may smoothly and gradually increase the screen brightness of the second system according to the preset first brightness adjustment rule to enter the high-brightness mode, e.g., adjusting the screen brightness of the second system to the maximum brightness value supported in the high-brightness mode (e.g., 256), thereby adjusting the second system from the normal mode to the high-brightness mode.

At block S507: adjusting the screen brightness of the second system from the maximum brightness value supported in the normal mode to a new brightness value.

When it is determined there is need to interrupt the entry into the high-brightness mode, the second system may first determine a new brightness value, and then smoothly and gradually adjust the screen brightness of the second system to the new brightness value according to the preset first brightness adjustment rule. In practical applications, the display controller of the second system may adjust the screen brightness of the second system from the maximum brightness value supported in the normal mode to the new brightness value, and the second system continues to operate in the normal mode.

The present disclosure does not limit the implementation of determining the new brightness value. For example, when the brightness decrease command or the mode interruption command carries a new brightness value, the second system may directly parse the command to obtain the new brightness value. Alternatively, the present disclosure may determine the new brightness value based on the current ambient brightness, such as querying a preset mapping table to find a new brightness value matching the current ambient brightness, etc.

In a second implementation, when the brightness mode is the high-brightness mode and the target mode is the normal mode, the second system may exit the high-brightness mode to adjust the current high-brightness mode of the second system to the normal mode.

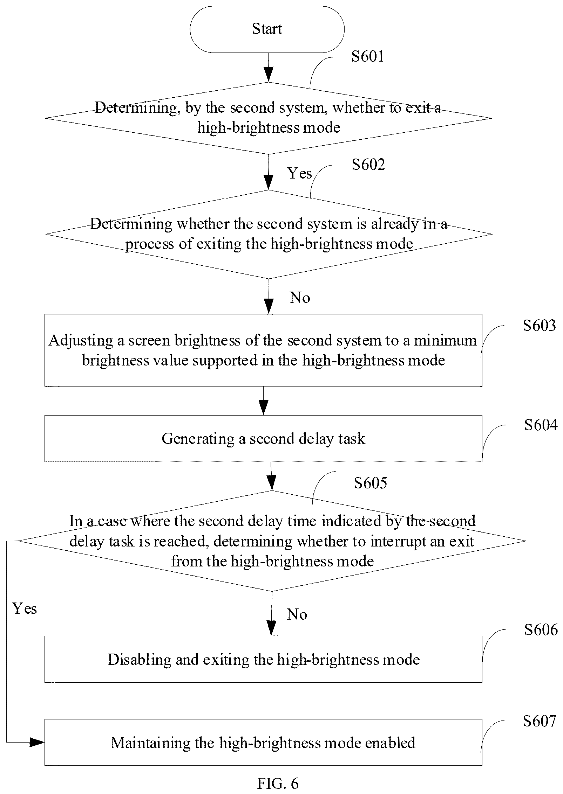

In practical applications, after receiving the mode adjustment command, the second system may identify whether it is already in a process of exiting the high-brightness mode. When it is identified that the second system is already in the process of exiting the high-brightness mode, the following described process may end. When it is identified that the second system is not in the process of exiting the high-brightness mode, the screen brightness of the second system may first be adjusted to a minimum brightness value supported in the high-brightness mode. The minimum brightness value is set by the system or user, for example, it may be 254, 255, or 256, etc. The present disclosure does not limit this. The processor of the second system sends a second delay command (also referred to as a second delay task) to the display controller of the second system, to indicate a second delay time required by the display controller. When the second delay time is reached, the high-brightness mode of the system may be disabled. The display controller may automatically decrease the screen brightness to exit the high-brightness mode and enter the normal mode, e.g., adjusting the screen brightness of the second system to the maximum brightness value supported in the normal mode (e.g., 254), etc. The present disclosure does not limit this. Reference may be made to FIG. 6 for a detailed introduction to the above mode adjustment process.

Referring to FIG. 6, FIG. 6 is a schematic flowchart of a mode adjustment method according to other embodiments of the present disclosure. The method includes operations at blocks illustrated in FIG. 6.

At block S601: determining, by the second system, whether to exit a high-brightness mode.

In the embodiments of the present disclosure, when the second system is currently in the high-brightness mode, the second system may detect or determine in real time or periodically whether it needs to exit the high-brightness mode. When the second system determines that it needs to exit the high-brightness mode, S602 is performed. Otherwise, i.e., when the second system determines that it does not need to exit the high-brightness mode, the process ends.

The present disclosure does not limit the implementation of determining whether to exit the high-brightness mode. For example, when the second system receives a mode adjustment command, it may be determined that the second system currently needs to exit the high-brightness mode to switch from the high-brightness mode to the normal mode, etc. For the introduction of the mode adjustment command, reference may be made to the relevant introduction in the foregoing embodiments, which will not be repeated herein.

At block S602: determining whether the second system is already in a process of exiting the high-brightness mode.

The present disclosure does not limit the implementation of S602. For example, the second system may determine whether its own screen brightness is already in a process of decreasing gradually. When the screen brightness is already in the process of decreasing gradually, it may be determined that the second system is already in the process of exiting the brightness mode, and the following described process may end; when the screen brightness is not in the process of decreasing gradually, it may be determined that the second system is not in the process of exiting the high-brightness mode, and S603 is performed.

At block S603: adjusting a screen brightness of the second system to a minimum brightness value supported in the high-brightness mode.

When it is determined that the second system is not in the process of exiting the high-brightness mode, the current screen brightness of the second system may be decreased according to a preset first brightness adjustment rule and adjusted to the minimum brightness value supported in the high-brightness mode (e.g., 254). For the first brightness adjustment rule, reference may be made to the relevant introduction in the foregoing embodiments, which will not be repeated herein.

At block S604: generating a second delay task.

The second system may submit a second delay task to a display controller of the second system via the processor. This second delay task is configured to reflect a second delay time required for the screen brightness adjustment in S603. The first delay time and the second delay time involved in the present disclosure may both be set by the system or user. They may be the same or different, which is not limited in the present disclosure.

At block S605: in a case where the second delay time indicated by the second delay task is reached, determining whether to interrupt an exit from the high-brightness mode.

When the second system detects that the current time has reached the second delay time, it may be determined whether the process of exiting the high-brightness mode needs to be interrupted currently. When it is determined that the process of exiting the high-brightness mode needs to be interrupted currently, S607 is performed. Otherwise, i.e., when it is determined that the process of exiting the high-brightness mode does not need to be interrupted currently, S606 is performed.

The present disclosure does not limit the implementation of determining whether to interrupt the exit from the high-brightness mode. For example, in a scenario, the second system may detect whether it currently needs to increase the screen brightness of the second system. When it needs to increase the screen brightness, it may be determined that the exit from the high-brightness mode needs to be interrupted. Otherwise, it may be determined that no interruption is needed. The present disclosure does not limit the implementation of detecting whether screen brightness increase is needed. For example, when the second system receives a brightness increase command, it may be determined that the second system currently needs to increase the screen brightness, etc. This will not be detailed or limited here.

In another scenario, the second system may detect whether a mode interruption command has been received. When the mode interruption command has been received, it may be determined that the exit from the high-brightness mode needs to be interrupted; otherwise, it may be determined that no interruption is needed. The present disclosure does not limit the implementation of receiving the mode interruption command. For example, the second system may receive a mode interruption command sent from another devices (e.g., a terminal device or server) via a network, etc.

At block S606: disabling and exiting the high-brightness mode.

When it is determined that there is no need to interrupt the exit from the high-brightness mode, the second system may disable the high-brightness mode. The display controller of the second system may smoothly and gradually decrease the screen brightness of the second system according to the preset first brightness rule to exit the high-brightness mode and enter the normal mode, e.g., adjusting the screen brightness of the second system to a new brightness value, thereby adjusting the second system from the high-brightness mode to the normal mode. The new brightness value is a brightness value set by the system or user, for example, a maximum brightness value supported in the normal mode (e.g., 254), etc.

At block S607: maintaining the high-brightness mode enabled.

When it is determined that the exit from the high-brightness mode needs to be interrupted, the second system may continue to maintain the high-brightness mode enabled, such that the second system continues to operate in the high-brightness mode.

It can be seen that when entering or exiting the AOD mode, the electronic device in the embodiments of the present disclosure may adjust the screen brightness of the second system based on the screen brightness information of the first system, thereby enabling smooth and convenient gradual screen brightness adjustment to improve the user experience. Applying the entry and exit of the AOD mode to the system switching scenario, the second system of the electronic device in the present disclosure may obtain the screen brightness information of its own first system, where the first system is a system running on the electronic device before the system switch, and the second system is a system running on the electronic device after the system switch. Based on the screen brightness information of the first system, the screen brightness of the second system is adjusted. In this way, the electronic device may adjust the screen brightness of the second system, to which it is required to switch, based on the screen brightness information of the first system before the system switch, thereby achieving the purpose of smooth and gradual screen brightness adjustment, which is beneficial for improving the user experience.

It should be understood that although the operations in the flowcharts from FIG. 2 to FIG. 5 are displayed sequentially as indicated by the arrows, these operations are not necessarily executed in the order indicated by the arrows. Unless explicitly stated herein, the execution of these operations is not strictly limited by sequence; these operations may be executed in other orders. Moreover, at least one of the operations in FIG. 2 to FIG. 5 may include multiple sub-steps or stages. These sub-steps or stages are not necessarily completed at the same time but may be executed at different times. The execution order of these sub-steps or stages is not necessarily sequential but may be performed in rotation or alternately with at least a part of other steps or at least a part of the sub-steps or stages of other steps.

Based on the foregoing embodiments, some embodiments of the present disclosure provide a screen brightness adjustment apparatus. The modules included in the apparatus and the units included in each module may be implemented by a processor; of course, they may be implemented by specific logic circuits. During implementation, the processor may be a Central Processing Unit (CPU), a Microprocessor (MPU), a Digital Signal Processor (DSP), or a Field-Programmable Gate Array (FPGA), etc.

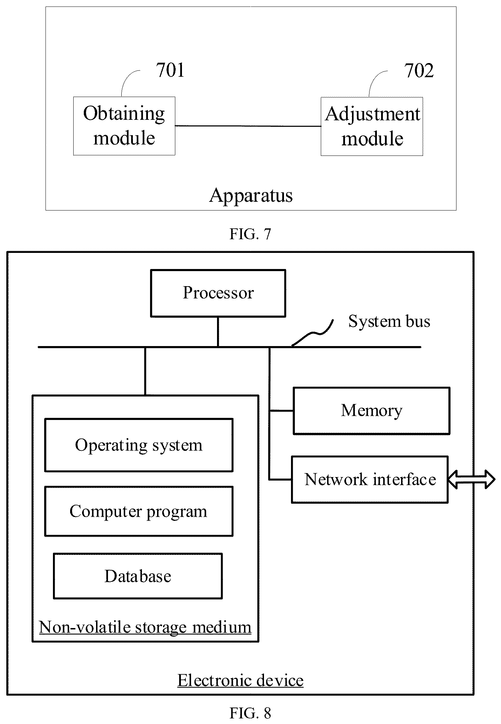

Referring to FIG. 7, FIG. 7 is a schematic structural diagram of a screen brightness adjustment apparatus according to some embodiments of the present disclosure. The apparatus shown in FIG. 7 is applied to an electronic device, and the electronic device includes at least a first system and a second system. The apparatus includes an obtaining module 701 and an adjustment module 702.

The obtaining module 701 is configured to obtain screen brightness information of the first system, where the first system is a system running on the electronic device before a system switch, and the second system is a system running on the electronic device after the system switch.

The adjustment module 702 is configured to adjust screen brightness of the second system based on the screen brightness information of the first system.

In some embodiments, the adjustment module 702 is specifically configured to: determine a screen state of the first system based on the screen brightness information of the first system, where the screen state includes a screen-on state and a screen-off state; determine a target brightness value required by the second system; and adjust the screen brightness of the second system to the target brightness value based on the screen state.

In some embodiments, the adjustment module 702 is specifically configured to:
in a case where the screen state is the screen-on state, adjust the screen brightness of the second system to the target brightness value according to a preset first brightness adjustment rule; or
in a case where the screen state is the screen-off state, adjust the screen brightness of the second system to the target brightness value according to a preset second brightness adjustment rule;
where a brightness adjustment rate indicated by the first brightness adjustment rule is less than a brightness adjustment rate indicated by the second brightness adjustment rule.

In some embodiments, the apparatus further includes a processing module (not shown). Before adjusting the screen brightness of the second system to the target brightness value, the processing module is configured to:
perform on/off control on a brightness gradual change function of the second system based on the screen state;
where the first brightness adjustment rule is a brightness adjustment rule adopted after enabling the brightness gradual change function, and the second brightness adjustment rule is a brightness adjustment rule adopted after disabling the brightness gradual change function.

In some embodiments, the processing module is specifically configured to:
send an on/off control command to a display controller of the second system based on the screen state, to instruct the on/off control of the brightness gradual change function of the second system; or
reset brightness gradual change indication information of the second system based on the screen state, to instruct the on/off control of the brightness gradual change function of the second system.

In some embodiments, the processing module is specifically configured to:
in a case where the screen state is the screen-on state, send an enable command to the display controller of the second system to instruct enabling the brightness gradual change function of the second system; or
in a case where the screen state is the screen-off state, send a disable command to the display controller of the second system to instruct disabling the brightness gradual change function of the second system.

In some embodiments, the processing module is specifically configured to:
in a case where the screen state is the screen-on state, reset the brightness gradual change indication information of the second system to indicate that the brightness gradual change function of the second system is enabled; or
in a case where the screen state is the screen-off state, reset the brightness gradual change indication information of the second system to indicate that the brightness gradual change function of the second system is disabled.

In some embodiments, the processing module is further configured to:
in a case where a screen-on command for the second system is received, redraw and display interface data of a target interface;
where the target interface is a main interface displayed in the first system before the electronic device performs the system switch.

In some embodiments, the processing module is further configured to:
receive a brightness adjustment command, where the brightness adjustment command is configured to instruct adjusting the screen brightness of the second system to a preset brightness value; and
in a case where the preset brightness value is different from a current target brightness value of the second system, perform at least one screen brightness adjustment on the second system to adjust the screen brightness of the second system to the preset brightness value.

In some embodiments, the processing module is further configured to:
receive a mode adjustment command, where the mode adjustment command is configured to instruct adjusting a current brightness mode of the second system to a target mode; the brightness mode includes a high-brightness mode and a normal mode, and a screen brightness indicated by the high-brightness mode is greater than a screen brightness indicated by the normal mode; and
in response to the mode adjustment command, adjust the current brightness mode of the second system to the target mode.

In some embodiments, the processing module is specifically configured to:
in a case where the brightness mode is the normal mode and the target mode is the high-brightness mode, adjust the screen brightness of the second system to a maximum brightness value supported in the normal mode, and then enter the high-brightness mode, thereby adjusting the current normal mode of the second system to the high-brightness mode; or
in a case where the brightness mode is the high-brightness mode and the target mode is the normal mode, exit the high-brightness mode to adjust the current high-brightness mode of the second system to the normal mode.

The description of the above apparatus embodiments is similar to the description of the method embodiments and has beneficial effects similar to those of the method embodiments. For technical details not disclosed in the apparatus embodiments of the present disclosure, reference may be made to the description of the method embodiments of the present disclosure.

It should be noted that the division of modules in the screen brightness adjustment apparatus shown in FIG. 7 in the embodiments of the present disclosure is schematic, merely a logical function division. In actual implementation, there may be other division manners. In addition, the functional units in the various embodiments of the present disclosure may be integrated into one processing unit, or may exist physically separately, or two or more units may be integrated into one unit. The above integrated units may be implemented in the form of hardware, or in the form of software functional units, or in a combination of hardware and software.

It should be noted that, in the embodiments of the present disclosure, when the above method is implemented in the form of a software functional module and sold or used as an independent product, it may be stored in a computer-readable storage medium. Based on this understanding, the technical solution of the embodiments of the present disclosure, in essence, or the part contributing to the related art, may be embodied in the form of a software product. The computer software product is stored in a storage medium and includes several instructions for causing an electronic device to execute all or part of the methods described in the various embodiments of the present disclosure. The aforementioned storage medium includes: U disk, mobile hard disk, Read-Only Memory (ROM), magnetic disk, or optical disk, and other media that can store program code. Thus, the embodiments of the present disclosure are not limited to any specific combination of hardware and software.

Some embodiments of the present disclosure provide an electronic device, which may be a smartwatch. Its internal structure diagram may be as shown in FIG. 8. The electronic device includes a processor, a memory, and a network interface connected via a system bus. The number of processors in the electronic device is not limited. For example, in practical applications, the electronic device includes a first processor and a second processor. FIG. 8 shows only one processor as an example, but this does not constitute a limitation. The processor of the electronic device is configured to provide computing and control capabilities. The memory of the electronic device includes a non-volatile storage medium and an internal memory. The non-volatile storage medium stores an operating system, computer programs, and a database. The internal memory provides an environment for the operation of the operating system and computer programs in the non-volatile storage medium. The database of the electronic device is configured to store data. The network interface of the electronic device is configured to communicate with external terminals via network connections. The computer program, when executed by the processor, implements a screen brightness adjustment method.

Some embodiments of the present disclosure provide a computer-readable storage medium having a computer program stored thereon. When the computer program is executed by a processor, it implements the operations of the method provided in the above embodiments.

Some embodiments of the present disclosure provide a computer program product containing instructions. When the computer program product runs on a computer, it causes the computer to execute the operations of the method provided in the above method embodiments.

Those skilled in the art can understand that the structure shown in FIG. 8 is only a block diagram of a part of the structure related to the solution of the present disclosure and does not constitute a limitation on the electronic device to which the solution of the present disclosure is applied. A specific electronic device may include more or fewer components than those shown in the figure, or a combination of some components, or a different arrangement of components.

In some embodiments, the apparatus provided by the present disclosure may be implemented in the form of a computer program, which can run on the electronic device shown in FIG. 8. The memory of the electronic device may store various program modules constituting the sampling apparatus, such as the obtaining module, adjustment module, and processing module shown in FIG. 7. The computer program composed of the various program modules can cause the processor to execute the data processing methods of the various embodiments of the present disclosure described in this specification.

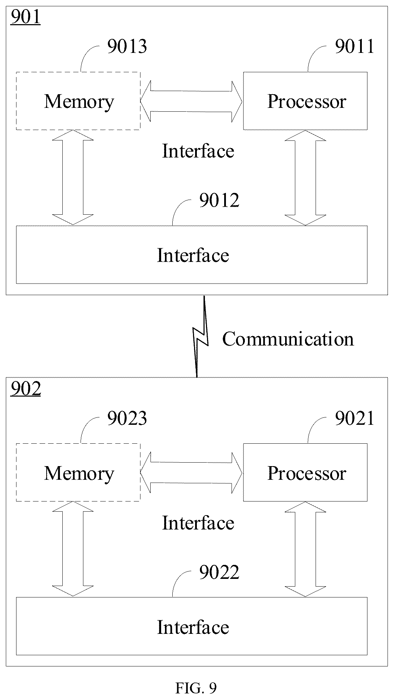

Referring to FIG. 9, FIG. 9 is a schematic structural diagram of a chip system according to some embodiments of the present disclosure. The chip system 90 shown in FIG. 9 includes a first system 901 and a second system 902. The first system or the second system may each be an entity chip. In other words, the chip system 90 may include a first chip 901 and a second chip 902. The first system 901 may include a processor 9011 and an interface 9012. In some embodiments, the first system 901 may further include a memory 9013. The number of processors 9011 may be one or more, and the number of interfaces 9012 may be multiple.

The second system 902 may include a processor 9021 and an interface 9022. In some embodiments, the second system 902 may further include a memory 9023. The number of processors 9021 may be one or more, and the number of interfaces 9022 may be multiple. The first system 901 and the second system 902 may share the same memory or use separate memories. The figure shows an example where the first system and the second system each use a different memory, but this does not constitute a limitation.

In some embodiments, in a case where the second system 902 (i.e., the second chip) is configured to implement the method embodiments described in the present disclosure:
the interface 9022 is configured to receive or output signals;
the processor 9021 is configured to execute part or all of the content of the screen brightness adjustment method embodiments described above.

Understandably, the processor in the embodiments of the present disclosure (which may be the aforementioned processor 9011 or processor 9021) may be an integrated circuit chip with signal processing capability. In the implementation process, the operations of the above method embodiments may be completed by integrated logic circuits in the processor or instructions in the form of software. The above processor may be a general-purpose processor, a Digital Signal Processor (DSP), an Application Specific Integrated Circuit (ASIC), a Field-Programmable Gate Array (FPGA), or other programmable logic devices, discrete gates or transistor logic devices, or discrete hardware components.

Understandably, the memory in the embodiments of the present disclosure (which may be the aforementioned memory 9013 or memory 9023) may be a volatile memory or a non-volatile memory, or may include both volatile and non-volatile memory. Among them, the non-volatile memory may be Read-Only Memory (ROM), Programmable Read-Only Memory (PROM), Erasable Programmable Read-Only Memory (EPROM), Electrically Erasable Programmable Read-Only Memory (EEPROM), or flash memory. The volatile memory may be Random Access Memory (RAM), which is used as an external cache. By way of example but not limitation, many forms of RAM are available, such as Static Random Access Memory (SRAM), Dynamic Random Access Memory (DRAM), Synchronous Dynamic Random Access Memory (SDRAM), Double Data Rate Synchronous Dynamic Random Access Memory (DDR SDRAM), Enhanced Synchronous Dynamic Random Access Memory (ESDRAM), SynchLink Dynamic Random Access Memory (SLDRAM), and Direct Rambus Random Access Memory (DR RAM). It should be noted that the memories of the systems and methods described herein are intended to include, but are not limited to, these and any other suitable types of memories.

It should be pointed out here that the descriptions of the above storage medium, device, and chip embodiments are similar to the descriptions of the above method embodiments and have beneficial effects similar to those of the method embodiments. For technical details not disclosed in the storage medium, storage medium, and device embodiments of the present disclosure, reference may be made to the descriptions of the method embodiments of the present disclosure.

It should be understood that the reference to "one embodiment" or "an embodiment" or "some embodiments" throughout the specification means that a specific feature, structure, or characteristic described in connection with the embodiment is included in at least some embodiments of the present disclosure. Therefore, the appearances of "in one embodiment" or "in an embodiment" or "in some embodiments" in various places throughout this specification are not necessarily all referring to the same embodiment. Furthermore, the specific features, structures, or characteristics may be combined in any suitable manner in one or more embodiments. It should be understood that, in the various embodiments of the present disclosure, the sequence numbers of the above processes do not imply an order of execution. The execution order of the processes should be determined by their functions and internal logic, and should not constitute any limitation on the implementation process of the embodiments of the present disclosure. The sequence numbers of the embodiments of the present disclosure are merely for description and do not represent the superiority or inferiority of the embodiments. The description of each embodiment above tends to emphasize the differences between the embodiments, and their same or similar parts may be referred to each other. For brevity, they are not repeated here.

The term "and/or" in this document is merely a descriptive association relationship, indicating that three relationships may exist. For example, A and/or B may indicate: A exists alone, A and B exist simultaneously, and B exists alone.

It should be noted that the terms "comprising", "including", or any other variation thereof in this document are intended to cover non-exclusive inclusion, such that a process, method, article, or device that includes a series of elements includes not only those elements but also other elements not explicitly listed, or elements inherent to such process, method, article, or device. Without more restrictions, an element defined by the phrase "comprising a ..." does not exclude the presence of additional identical elements in the process, method, article, or device that includes the element.

In the several embodiments provided by the present disclosure, it should be understood that the disclosed device and method may be implemented in other ways. The above-described embodiments are merely illustrative. For example, the division of the modules is merely a logical functional division. In actual implementation, there may be other division methods. For instance, multiple modules or components may be combined or integrated into another system, or some features may be ignored or not executed. In addition, the coupling or direct coupling or communication connection between the components shown or discussed may be through some interfaces, and the indirect coupling or communication connection between devices or modules may be electrical, mechanical, or otherwise.

The modules described as separate components may or may not be physically separate. The components displayed as modules may or may not be physical modules; they may be located in one place or distributed across multiple network units. Some or all of the modules may be selected according to actual needs to achieve the objectives of the embodiments.

In addition, the functional modules in the various embodiments of the present disclosure may be integrated into one processing unit, or each module may exist physically separately, or two or more modules may be integrated into one unit. The above integrated modules may be implemented in the form of hardware or in the form of hardware plus software functional units.

Those skilled in the art can understand that all or part of the operations of the above method embodiments may be completed by hardware related to program instructions. The aforementioned program may be stored in a computer-readable storage medium. When the program is executed, the operations of the method embodiments are performed. The aforementioned storage medium includes various media that can store program codes, such as mobile storage devices, Read-Only Memory (ROM), magnetic disks, or optical disks.

Alternatively, when the above integrated units of the present disclosure are implemented in the form of software functional modules and sold or used as independent products, they may be stored in a computer-readable storage medium. Based on this understanding, the technical solution of the present disclosure, in essence, or the part contributing to the related art, may be embodied in the form of a software product. The computer software product is stored in a storage medium and includes several instructions for causing an electronic device to execute all or part of the methods described in the various embodiments of the present disclosure. The aforementioned storage medium includes various media that can store program codes, such as mobile storage devices, ROM, magnetic disks, or optical disks.

The methods disclosed in the several method embodiments provided by the present disclosure may be combined arbitrarily without conflict to form new method embodiments.

The features disclosed in the several product embodiments provided by the present disclosure may be combined arbitrarily without conflict to form new product embodiments.

The features disclosed in the several method or device embodiments provided by the present disclosure may be combined arbitrarily without conflict to form new method embodiments or device embodiments.

The above are only implementations of the present disclosure, but the scope of the present disclosure is not limited thereto. Those skilled in the art can easily think of changes or substitutions within the technical scope disclosed in the present disclosure, which should be covered within the scope of the present disclosure. Therefore, the scope of the present disclosure shall be subject to the protection scope of the claims.

## Claims

1. A screen brightness adjustment method, applied to an electronic device; wherein the electronic device comprises a first system and a second system, **characterized in that** the screen brightness adjustment method comprises:
obtaining screen brightness information of the first system; wherein the first system is a system running on the electronic device before a system switch, and the second system is a system running on the electronic device after the system switch; and
adjusting screen brightness of the second system based on the screen brightness information of the first system.

2. The method according to claim 1, wherein the adjusting screen brightness of the second system based on the screen brightness information of the first system comprises:
determining a screen state of the first system based on the screen brightness information of the first system; wherein the screen state comprises a screen-on state and a screen-off state;
determining a target brightness value required by the second system; and
adjusting the screen brightness of the second system to the target brightness value based on the screen state.

3. The method according to claim 2, wherein the adjusting the screen brightness of the second system to the target brightness value based on the screen state comprises:
in a case where the screen state is the screen-on state, adjusting the screen brightness of the second system to the target brightness value according to a preset first brightness adjustment rule; or
in a case where the screen state is the screen-off state, adjusting the screen brightness of the second system to the target brightness value according to a preset second brightness adjustment rule;
where a brightness adjustment rate indicated by the first brightness adjustment rule is less than a brightness adjustment rate indicated by the second brightness adjustment rule.

4. The method according to claim 3, before the adjusting the screen brightness of the second system to the target brightness value, further comprising:
performing on/off control on a brightness gradual change function of the second system based on the screen state;
wherein the first brightness adjustment rule is a brightness adjustment rule adopted after enabling the brightness gradual change function, and the second brightness adjustment rule is a brightness adjustment rule adopted after disabling the brightness gradual change function.

5. The method according to claim 4, wherein the performing on/off control on a brightness gradual change function of the second system based on the screen state comprises:
sending an on/off control command to a display controller of the second system based on the screen state, to instruct the on/off control of the brightness gradual change function of the second system; or
resetting brightness gradual change indication information of the second system based on the screen state, to instruct the on/off control of the brightness gradual change function of the second system.

6. The method according to claim 5, wherein the sending an on/off control command to a display controller of the second system based on the screen state, to instruct the on/off control of the brightness gradual change function of the second system comprises:
in a case where the screen state is the screen-on state, sending an enable command to the display controller of the second system to instruct enabling the brightness gradual change function of the second system; or
in a case where the screen state is the screen-off state, sending a disable command to the display controller of the second system to instruct disabling the brightness gradual change function of the second system.

7. The method according to claim 5, wherein the resetting brightness gradual change indication information of the second system based on the screen state, to instruct the on/off control of the brightness gradual change function of the second system comprises:
in a case where the screen state is the screen-on state, resetting the brightness gradual change indication information of the second system to indicate that the brightness gradual change function of the second system is enabled; or
in a case where the screen state is the screen-off state, resetting the brightness gradual change indication information of the second system to indicate that the brightness gradual change function of the second system is disabled.

8. The method according to claim 2, wherein the determining a screen state of the first system based on the screen brightness information of the first system comprises:
in a case where a brightness value indicated by the screen brightness information of the first system is greater than a preset screen-on threshold, determining that the screen state of the first system is the screen-on state; and
in a case where the brightness value indicated by the screen brightness information of the first system is less than a preset screen-off threshold, determining that the screen state of the first system is the screen-off state.

9. The method according to any one of claims 1-8, after the obtaining screen brightness information of the first system, further comprising:
performing initialization on a display screen; wherein the initialization comprises resetting a liquid crystal display, setting a display direction of the liquid crystal display, and setting a display window.

10. The method according to any one of claims 1-8, further comprising:
in a case where a screen-on command for the second system is received, redrawing and displaying interface data of a target interface;
wherein the target interface is a main interface displayed in the first system before the electronic device performs the system switch.

11. The method according to claim 10, wherein the main interface is set by the system or a user, and the main interface comprises a topmost or surface-level interface among all interfaces displayed in the first system before the system switch, or a last started interface among all interfaces displayed in the first system.

12. The method according to any one of claims 1-8, further comprising:
receiving a brightness adjustment command; wherein the brightness adjustment command is configured to instruct adjusting the screen brightness of the second system to a preset brightness value; and
in a case where the preset brightness value is different from a current target brightness value of the second system, performing at least one screen brightness adjustment on the second system to adjust the screen brightness of the second system to the preset brightness value.

13. The method according to any one of claims 1-8, further comprising:
receiving a mode adjustment command; wherein the mode adjustment command is configured to instruct adjusting a current brightness mode of the second system to a target mode; the brightness mode comprises a high-brightness mode and a normal mode, and a screen brightness indicated by the high-brightness mode is greater than a screen brightness indicated by the normal mode; and
in response to the mode adjustment command, adjusting the current brightness mode of the second system to the target mode.

14. The method according to claim 13, wherein the adjusting the current brightness mode of the second system to the target mode comprises:
in a case where the brightness mode is the normal mode and the target mode is the high-brightness mode, adjusting the screen brightness of the second system to a maximum brightness value supported in the normal mode, and then entering the high-brightness mode, thereby adjusting the current normal mode of the second system to the high-brightness mode; or
in a case where the brightness mode is the high-brightness mode and the target mode is the normal mode, exiting the high-brightness mode to adjust the current high-brightness mode of the second system to the normal mode.

15. The method according to claim 14, after the adjusting the screen brightness of the second system to a maximum brightness value supported in the normal mode, further comprising:
generating a first delay task; wherein the first delay task is configured to reflect a first delay time required for adjusting the screen brightness of the second system to the maximum brightness value supported in the normal mode;
wherein the entering the high-brightness mode comprises:
in a case where the first delay time indicated by the first delay task is reached, in response to no interruption of entering the high-brightness mode being detected, entering the high-brightness mode.

16. The method according to claim 15, further comprising:
in a case where the first delay time indicated by the first delay task is reached, in response to an interruption of entering the high-brightness mode being detected, determining a new brightness value, and adjusting the screen brightness of the second system to the new brightness value according to a preset first brightness adjustment rule.

17. The method according to claim 14, wherein, in a case where the brightness mode is the high-brightness mode and the target mode is the normal mode, the exiting the high-brightness mode comprises:
in a case where the brightness mode is the high-brightness mode and the target mode is the normal mode, adjusting the screen brightness of the second system to a minimum brightness value supported in the high-brightness mode;
generating a second delay task; wherein the second delay task is configured to reflect a second delay time required for adjusting the screen brightness of the second system to the minimum brightness value supported in the high-brightness mode; and
in a case where the second delay time indicated by the second delay task is reached, in response to no interruption of exiting the high-brightness mode being detected, exiting the high-brightness mode.

18. A screen brightness adjustment apparatus, applied to an electronic device; wherein the electronic device comprises a first system and a second system, **characterized in that** the screen brightness adjustment apparatus comprises:
an obtaining module, configured to obtain screen brightness information of the first system; wherein the first system is a system running on the electronic device before a system switch, and the second system is a system running on the electronic device after the system switch; and
an adjustment module, configured to adjust screen brightness of the second system based on the screen brightness information of the first system.

19. An electronic device, comprising a first system and a second system; wherein the second system comprises a memory and a processor, and the memory stores a computer program executable by the processor; the processor, when executing the program, implements the method according to any one of claims 1 to 17.

20. A computer-readable storage medium, storing a computer program; wherein the computer program, when executed by a processor, causes the processor to implement the method according to any one of claims 1 to 17.
